# EUROPÄISCHE PATENTSCHRIFT

(11) **EP 0 663 321 B1**
(45) Veröffentlichungstag und Bekanntmachung des Hinweises auf die Patenterteilung: **28.01.1998**
(21) Anmeldenummer: 94118813.8
(22) Anmeldetag: 30.11.1994
(51) Int. Cl.: B60Q 1/068

(54) **Einstelleinrichtung für einen Reflektor eines Fahrzeugscheinwerfers**
Control device for a vehicle headlight reflector
Dispositif de réglage pour le réflecteur d'un phase de véhicule

(30) Priorität: 16.12.1993 DE 4342881
(43) Veröffentlichungstag der Anmeldung: 19.07.1995
(73) Patentinhaber: Hella KG Hueck & Co., 59552 Lippstadt (DE)
(72) Erfinder: Kemper, Wolfgang, D-59602 Rüthen (DE); Briese, Heiko, D-59555 Lippstadt (DE)

(56) Entgegenhaltungen:
- US-A- 4 959 758

## Beschreibung

Die Erfindung betrifft eine Einstelleinrichtung für einen oder mehrere Reflektoren eines Fahrzeugscheinwerfers, durch welche der Reflektor im Inneren eines durch eine Abschlußscheibe abgeschlossenen Gehäuses um eine Achse schwenkbar ist, und welche im Inneren des Gehäuses zwei miteinander gekoppelte Umlenkvorrichtungen aufweist, von denen eine Umlenkvorrichtung aus einem ersten Winkelgetriebe mit einem Zahnradpaar besteht, von dem ein Zahnrad drehfest mit einem Verstellbolzen verbunden ist, welcher den Reflektor mit einer rückwärtigen Gehäusewand verbindet, und das andere Zahnrad zwischen dem Zahnrad des Verstellbolzens und einer Lagerschale der rückwärtigen Gehäusewand eingesetzt ist, und die andere Umlenkvorrichtung mit einem von dem ersten Winkelgetriebe wegführenden Ende in einer Öffnung des Gehäuses verdrehbar gelagert ist und eine von der Außenseite des Gehäuses her betätigbare Drehvorrichtung aufweist.

Eine solche Einstelleinrichtung für einen Reflektor eines Fahrzeugscheinwerfers ist aus der DE 35 25 618 A 1 bekannt. Die mit dem ersten Winkelgetriebe gekoppelte Umlenkvorrichtung weist eine biegsame Welle auf. Die biegsame Welle ist am ersten Winkelgetriebe auf einen Profilstift aufgeschoben und über diesen drehfest mit dem Zahnrad verbunden, welches mit seinen Zähnen in den Zähnen des Zahnrades des Verstellbolzens kämmt und zusammen mit dem Verstellbolzen durch einen als Befestigungsmittel dienenden Deckel in der Lagerschale der rückwärtigen Gehäusewand sowohl radial als auch axial arretiert ist. Hierbei verläuft der Verstellbolzen durch eine Öffnung des Deckels hindurch und greift mit seinem zur rückwärtigen Gehäusewand weisenden Endabschnitt in einen an die Gehäusewand angeformten hülsenartigen Ansatz ein. Das in die rückwärtige Gehäusewand eingebrachte Lager des drehfest mit der biegsamen Welle verbundenen Zahnrades des ersten Winkelgetriebes ist eine in die Gehäusewand und den Deckel eingebrachte umlaufende Ringnut, in welche das Zahnrad und die an ihn angrenzende biegsame Welle jeweils mit einem Ringbund eingreifen. Bei einer solchen Lagerung der biegsamen Welle und des mit der biegsamen Welle drehfest verbundenen Zahnrades müssen der Ringbund der biegsamen Welle und des Zahnrades und die ihn aufnehmende Ringnut maßlich genau aufeinander abgestimmt sein, damit der Ringbund der biegsamen Welle weder wegen eines zu kleinen Spiels zu schwergängig ist noch wegen eines zu großen Spiels das mit ihm verbundene Zahnrad eine zu große Lageabweichung zu dem ihm benachbarten Zahnrad aufweist. Bei der Montage des Deckels, welcher die beiden Zahnräder des ersten Winkelgetriebes abdeckt, muß außerdem sehr genau darauf geachtet werden, daß der von dem Deckel gebildete Abschnitt und der von dem Gehäuse gebildete Abschnitt der Ringnut genau zueinander ausgerichtet sind. Die Drehachse des Zahnrades des ersten Winkelgetriebes, mit welchem die biegsame Welle drehfest verbunden ist, verläuft horizontal und annähernd parallel zur rückwärtigen Gehäusewand, während die Drehachse der in der Öffnung des Gehäuses drehbar gelagerten Drehvorrichtung (Handhabe) annähernd parallel zum Verstellbolzen des ersten Winkelgetriebes verläuft. Die biegsame Welle beschreibt zwischen der Handhabe und dem ersten Winkelgetriebe einen großen Bogen, damit nicht die Gefahr des Abknickens der biegsamen Welle besteht. Jedoch ragt hierbei die biegsame Welle sehr tief in das Innere des Gehäuses hinein und kann somit nur bei entsprechendem Raumangebot im Inneren des Scheinwerfers verwendet werden. An der Handhabe ist die biegsame Welle auf einen profilierten Endabschnitt eines Bolzens aufgeschoben, welcher mit dem anderen Endabschnitt die Handhabe trägt und zwischen beiden Endabschnitten in der Öffnung des Gehäuses drehbar gelagert ist. Das Montieren der biegsamen Welle ist in der Massenfertigung umständlich und zeitaufwendig und außerdem ist sowohl die biegsame Welle sehr kostenintensiv in ihrer Herstellung als auch die Verbindung zwischen ihr und dem die Handhabe tragenden Bolzen gegenüber einem Lösen nicht sicher ist. Bei einem Verstellen des Reflektors über die beiden Umlenkvorrichtungen ist es weiterhin nachteilig, daß durch die biegsame Welle eine Hysteresis besteht, durch welche der Reflektor sich ruckartig verstellen kann. Ruckartiges Verstellen führt in der Massenfertigung zu einer ungenauen Einstellung des Reflektors.

Aufgabe der Erfindung ist es, die im Oberbegriff des Anspruchs 1 beschriebene Einstelleinrichtung für einen Reflektor eines Fahrzeugscheinwerfers derart zu gestalten, daß ihre beiden miteinander gekoppelten Umlenkvorrichtungen nur sowenig wie möglich in das Innere des Gehäuses hineinragen müssen und aus möglichst wenigen und einfach zu montierenden Teilen bestehen sollen. Darüber hinaus sollen die beiden Umlenkvorrichtungen kostengünstig herstellbar und sehr funktionssicher sein. Diese Aufgabe wird nach der Erfindung dadurch gelöst, daß
- die mit dem ersten Winkelgetriebe gekoppelte Umlenkvorrichtung aus einem zweiten Winkelgetriebe mit einem Zahnradpaar besteht,
- eine aus starrem Material hergestellte Welle
   - an einem freien Ende drehfest mit dem Zahnrad des ersten Winkelgetriebes und mit dem anderen freien Ende drehfest mit einem Zahnrad des zweiten Winkelgetriebes verbunden ist;
   - zur Innenseite der rückwärtigen Gehäusewand angrenzend verläuft;
   - zumindest mit ihren die Zahnräder tragenden Enden in eine Lagerschale der rückwärtigen Gehäusewand eingesetzt ist;
   - in der rinnenartigen Lagerschale radial durch ein Befestigungs- und/oder ein Abdeckungselement für die Zahnräder gehalten ist, welche mit ihren Zähnen in den Zähnen der drehfest mit der Welle verbundenen Zahnräder kämmen.

Die Montage der beiden Winkelgetriebe ist sehr einfach, da nach einem Einlegen der Welle zusammen mit den von ihr getragenen Zahnrädern in die Lagerschale der Gehäusewand und nach der Montage der übrigen Teile der beiden Winkelgetriebe die starre Welle und die von ihr getragenen Zahnräder ohne ein zusätzliches Teil in der Lagerschale gehalten sein können. Die die Zahnräder tragenden Enden der Welle können unmittelbar und/oder über die Zahnräder mittelbar an der Lagerschale der rückwärtigen Gehäusewand anliegen. Zwischen den beiden Winkelgetrieben ist die Welle auch ohne ein zusätzliches Teil in der Lagerschale gegenüber einem seitlichen Ausbiegen gehalten, wenn die Lagerschale rinnenartig gestaltet und entsprechend tief ausgeführt ist. Zur Unterbringung der die beiden Winkelgetriebe verbindenden Welle und des zweiten Winkelgetriebes ist nur sehr wenig Raum im Inneren des Scheinwerfers notwendig, da die Welle an die rückwärtige Gehäusewand des Scheinwerfers angrenzend verläuft.

Weiterhin ist es vorteilhaft, wenn die Welle mit dem das Zahnrad des ersten Winkelgetriebes aufweisenden Endabschnitt unmittelbar durch das Zahnrad des Verstellbolzens und mit dem anderen Endabschnitt durch einen die beiden Zahnräder des zweiten Winkelgetriebes abdeckenden Deckel in der rinnenförmigen Lagerschale gehalten ist. Dadurch ist eine einfache und schnelle Montage der beiden Winkelgetriebe möglich, und ihre Herstellung ist sehr kostengünstig.

Vorteilhaft ist es weiterhin, wenn die Welle annähernd über ihre gesamte Länge in der rinnenförmigen Lagerschale gelagert ist und die rinnenförmige Lagerschale auf der Außenseite des Gehäuses eine Ausbauchung bildet. Dadurch ist die Welle in dem Gehäuse sehr gut gehalten und sehr platzsparend angeordnet.

Ein weiterer Vorteil ist es, wenn zwischen der Welle und der rinnenartigen Lagerschale des Gehäuses eine die Welle axial arretierende Nut-Feder-Verbindung besteht, wobei die Feder mit Spiel in die Nut eingreift und von einem an die Welle angeformten umlaufenden Flansch gebildet ist, der in eine entsprechende Nut der Lagerschale eingreift und annähernd auf halber Länge der Welle angeordnet ist. Da von einer solchen Nut-Feder-Verbindung ausschließlich die axiale Arretierung der Welle gegeben ist, kann eine kleine Toleranz für das radiale Spiel der Welle leicht eingehalten werden. Wegen der zentralen Anordnung der Nut-Feder-Verbindung ist der Abstand der beiden Zahnräder der Welle zur Nut-Feder-Verbindung hin immer gleich groß.

Ein weiterer Vorteil ist es, wenn der das Zahnrad des ersten Winkelgetriebes tragende Verstellbolzen in einer Öffnung des Gehäuses verdrehbar gelagert ist und mit einem Kopf an dem äußeren Öffnungsrand anliegt, wobei das Zahnrad auf den zum Reflektor hin gerichteten Schaft des Verstellbolzens im Preßsitz aufgeschoben ist und mit einer Seitenfläche am inneren Öffnungsrand der Gehäusewand anliegt. Hierbei befestigen das Zahnrad und der Verstellbolzen sich selbst an der rückwärtigen Gehäusewand. In diesem Zusammenhang ist es weiterhin vorteilhaft, wenn das Zahnrad des Verstellbolzens mit einem umlaufenden Hals an der rückwärtigen Gehäusewand anliegt und sowohl der Hals des Zahnrades als auch der Kopf des Verstellbolzens in einem hülsenförmigen Ansatz der Gehäusewand mit Spiel eingreifen, wobei der hülsenförmige Ansatz für den Hals des Zahnrades zu der Seite der Welle hin geöffnet ist. Dadurch ist eine stabile Halterung für den Verstellbolzen und das Zahnrad an der rückwärtigen Gehäusewand gegeben.

Außerdem ist es vorteilhaft, wenn die rinnenartige Lagerschale so lang ausgeführt ist, daß in sie sowohl die Welle als auch die mit der Welle einstückig hergestellten Zahnräder eingreifen. Weiterhin ist es zweckmäßig, wenn in die rückwärtige Gehäusewand, in welche eine Lagerschale für das von der Welle getragene Zahnrad des zweiten Winkelgetriebes eingebracht ist, für das in einer Öffnung des Gehäuses gelagerte Zahnrad des zweiten Winkelgetriebes eine Lagerschale eingebracht ist, welche in die Lagerschale für das Zahnrad der Welle übergeht und zusammen mit der Lagerschale in einem Winkel verläuft. Dadurch ist die Lagerung der Welle und der Zahnräder des zweiten Winkelgetriebes besonders sicher und ihre Anordnung sehr platzsparend.

Bei einer besonders vorteilhaften Weiterbildung der Erfindung verläuft die Achse der Welle horizontal und die Achse des in der Öffnung des Gehäuses gelagerten Zahnrades des zweiten Winkelgetriebes vertikal, wobei das Zahnrad in eine obere Seitenwand des Gehäuses eingesetzt ist und mit seiner Drehvorrichtung zu einer Drehvorrichtung einer anderen Einstelleinrichtung für den Reflektor benachbart liegt. Die beiden Drehvorrichtungen sind leicht und einfach von der Oberseite des Scheinwerfers her erreichbar, und es ist für sie zusammen nur ein kleiner Freiraum in der Fahrzeugkarosserie notwendig. Die Drehvorrichtungen können von Hand oder mit einem Werkzeug betätigt werden.

Eine im Aufbau einfache und kostengünstig herstellbare Einstelleinrichtung besteht, wenn zumindest eines von der Welle getragenen Zahnräder einstückig mit der Welle hergestellt ist. Sind nicht beide Zahnräder einstückig mit der Welle ausgeführt, sondern nur eines der beiden Zahnräder, ist es sehr vorteilhaft, wenn das separate Zahnrad von einem freien Endabschnitt der starren Welle axial verschiebbar getragen ist. Dadurch können die Zahnräder der Welle auch dann genau zu den ihnen benachbarten Zahnrädern positioniert werden, wenn der Abstand der beiden Winkelgetriebe zueinander grob toleriert ist.

Das axial verschiebbare Zahnrad ist sowohl radial als auch axial in einer Lagerschale der Gehäusewand arretiert, wenn es ein Zahnrad des zweiten Winkelgetriebes ist und in vorteilhafter Art und Weise ein die beiden Zahnräder des zweiten Winkelgetriebes abdeckender Deckel mit einem Federelement in eine umlaufende Nut des axial verschiebbaren Zahnrades eingreift. In diesem Zusammenhang ist es weiterhin vorteilhaft, wenn der die beiden Zahnräder abdeckende Deckel mit jeweils einem Federelement in eine Nut der beiden Zahnräder eingreift.

Besteht zwischen dem axial verschiebbaren Zahnrad und der starren Welle radial ein großes Spiel, ist es weiterhin vorteilhaft, wenn der Deckel mit einem freien Randabschnitt sich über das verschiebbare Zahnrad hinaus erstreckt und zur Mantelfläche der Welle angrenzend verläuft.

Die Welle ist leichtgängig verdrehbar, wenn sie zwischen den beiden Zahnrädern in einem Abstand zur Innenseite der rückwärtigen Gehäusewand verläuft.

Ein einstückig mit der Welle ausgeführtes Zahnrad des ersten Winkelgetriebes ist genau zu dem ihm benachbarten Zahnrad des ersten Winkelgetriebes positioniert, wenn der einstückig mit dem Zahnrad ausgeführte Endabschnitt der Welle eine zum zweiten Winkelgetriebe hin gerichtete umlaufende Schulter aufweist, an welche ein Positionierungsansatz der Innenseite der rückwärtigen Gehäusewand angrenzt. Dadurch ist nicht nur das einstückig mit der Welle ausgeführte Zahnrad sondern auch die Welle selbst axial an der Gehäusewand arretiert. In diesem Zusammenhang ist es besonders vorteilhaft, wenn der Positionierungsansatz eine Lagerschale für die die Zahnräder tragende Welle bildet.

Zwei Ausführungsbeispiele nach der Erfindung sind in der Zeichnung dargestellt, und zwar zeigt
- Figur 1: eine Rückansicht auf das Gehäuse eines Fahrzeugscheinwerfers, welcher zwei Einstelleinrichtungen für einen in das Gehäuse eingesetzten Reflektor aufweist,
- Figur 2: einen Schnitt nach der Linie A-A der Figur 1 durch eine der Einstelleinrichtungen (erstes Ausführungsbeispiel),
- Figur 3: einen Schnitt nach der Linie B-B der Figur 1,
- Figur 4: einen Schnitt nach der Linie C-C der Figur 1 und
- Figur 5: einen Schnitt nach der Linie A-A der Figur 1 durch eine der Einstelleinrichtungen (zweites Ausführungsbeispiel).

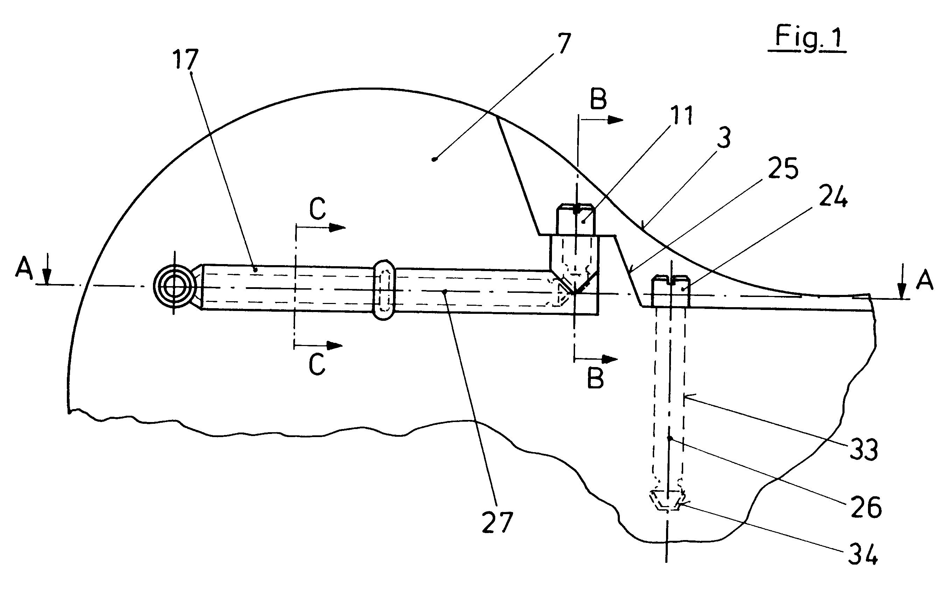

Der Scheinwerfer nach den Figuren 1 bis 4 weist ein aus Kunststoff bestehendes, topfförmiges Gehäuse (3), eine das topfförmige Gehäuse auf seiner Vorderseite abschließende, lichtdurchlässige Abschlußscheibe (2) und zwei Einstelleinrichtungen für einen in das Innere des Gehäuses eingesetzten schalenförmigen Reflektor (1) auf. Der Reflektor (1) ist durch die beiden Einstelleinrichtungen um zwei in einem rechten Winkel zueinander verlaufende Schwenkachsen (26 und 27) verschwenkbar. Die Drehvorrichtungen (11 bzw. 24) der beiden Einstelleinrichtungen sind an der Außenseite einer oberen Seitenwand (25) des topfförmigen Gehäuses (3) angeordnet und sind manuell oder mit einem Werkzeug betätigbare Handhaben. Durch die Handhabe (11) ist der Reflektor (3) über zwei Umlenkgetriebe, welche durch ein erstes und zweites Winkelgetriebe (4 bzw. 12) gebildet sind, um die vertikale Achse (26) schwenkbar und durch die Handhabe (24) über ein nicht dargestelltes Umlenkgetriebe um die horizontale Achse (27) schwenkbar. Die Handhaben (11 und 24) der beiden Einstelleinrichtungen liegen dicht beieinander und sind nahe dem vorderen Rand des Gehäuses (3) angeordnet. Das erste und zweite Winkelgetriebe (4 bzw. 12) besteht jeweils aus einem Kegelzahnradpaar. Die weit auseinander liegenden Winkelgetriebe (4 und 5) sind durch eine aus Kunststoff bestehende starre Welle (13) miteinander gekoppelt. Der zur Herstellung der starren Welle (13) werwendete Kunststoff darf nicht spröde sein, sondern muß eine kleine Elastizität aufweisen. Die Welle ist auf ihrer gesamten Länge mit Durchbrüchen (28) versehen und hat somit bei einem für ihre notwendige Steifigkeit ausreichend großen Durchmesser eine geringe Masse und weist über ihre gesamte Länge annähernd eine gleich große Wandstärke auf. Die Welle (13) verläuft in ihrer Längsausdehnung horizontal und ist in eine rinnenartige Lagerschale (9), welche in die Innenseite einer rückwärtigen Gehäusewand (7) eingebracht ist und über die gesamte Länge der Welle (13) verläuft, eingesetzt. An den freien Enden weist die Welle (13) jeweils ein einstückig angeformtes Zahnrad (8 bzw. 14) auf. Die Welle (13) weist zentral an ihrer Außenseite einen umlaufenden Flansch (18) auf, welcher mit Spiel in einer Nut (19) der rinnenförmigen Lagerschale (9) eingreift. Der dem ersten Winkelgetriebe (4) benachbarte Endabschnitt der rinnenförmigen Lagerschale (9) verläuft tiefer als die übrige Lagerschale (9). Dadurch verläuft der das Zahnrad (8) des ersten Winkelgetriebes (4) aufweisende Endabschnitt der Welle (13) in einem Abstand zu der Lagerschale (9).

Das zweite Winkelgetriebe (12) weist ein aus Kunststoff bestehendes Drehteil (29) auf, an welches die aus einem Drehknopf bestehende Handhabe (11) und das Zahnrad (15) des zweiten Winkelgetriebes angeformt sind. Zwischen der Handhabe (11) und dem Zahnrad (15) ist das Drehteil (29) in einer Öffnung (10) in der oberen Seitenwand (25) des Gehäuses (3) verdrehbar gelagert. Dabei liegt der Drehknopf (11) an dem äußeren Rand der Öffnung (10) an, und eine in eine umlaufende Ringnut des Drehteils (29) eingesetzte Ringdichtung liegt dicht an der Innenseite der Öffnung (10) an. Die Innenseite der Öffnung (10) geht in eine in die rückwärtige Gehäusewand (7) eingebrachte Lagerschale (23) über, welche wiederum in die rinnenartige Lagerschale (9) übergeht und zu dieser in einem rechten Winkel steht. Die beiden Lagerschalen (9 und 23) sind auf der Rückseite des Gehäuses (3) als Ausbauchungen (17) zu sehen. Auf die beiden Zahnräder (15 und 14) des zweiten Winkelgetriebes (12) ist von der Innenseite des Gehäuses (3) her ein Deckel (16) aufgesetzt, welcher mit einer Schraube an der Gehäusewand (7) befestigt ist und mit einem zur rückwärtigen Gehäusewand gerichteten Seitenrand in eine an das Zahnrad (15) angrenzende Ringnut des Drehteils (29) mit Spiel eingreift. Durch den Deckel ist somit das Drehteil (29) axial und die Welle an dem Zahnrad (14) radial gehalten.

Das an der Welle (13) angeformte Zahnrad (8) des ersten Winkelgetriebes (4) kämmt mit seinen Zähnen in den Zähnen des Zahnrades (5), welches mit seiner Drehachse annähernd in einem rechten Winkel zur Drehachse der Welle (13) verläuft und auf einen zu dem Reflektor (1) hin weisenden Gewindeschaft eines die Drehachse bildenden Verstellbolzens (6) im Preßsitz aufgeschoben ist. Der Verstellbolzen (6) ist von der Außenseite des Gehäuses her durch eine Öffnung in der rückwärtigen Gehäusewand (7) hindurchgeführt und liegt unter Zwischenschaltung einer Ringdichtung mit einem Kopf (20) außen an der rückwärtigen Gehäusewand (7) an. Der Kopf (20) und ein an das Zahnrad (5) angeformter Hals (21) greifen jeweils in einen hülsenförmigen Ansatz (22) der Gehäusewand (7) ein, wobei der hülsenförmige Ansatz (22) auf der Innenseite der Gehäusewand (7) zur Welle (13) hin geöffnet ist. An den Zähnen des Zahnrades (5) liegt die Welle (7) mit den Zähnen des Zahnrades (8) unter Vorspannung an und drückt dabei den Kopf (20) des Verstellbolzens (6) gegen eine zwischen den Kopf (20) und der Gehäusewand (7) eingesetzte Ringdichtung (nicht dargestellt). Dies ist möglich, weil der das Zahnrad (8) tragende freie Endabschnitt der Welle (13) zur rinnenartigen Lagerschale (9) beabstandet ist und somit ein freistehender Träger für das Zahnrad (8) ist. Damit der Festsitz des Zahnrades (5) auf dem Verstellbolzen (6) ausreichend groß ist, ist zwischen dem Gewindeschaft des Verstellbolzens (6) und seinem Kopf auf seiner Mantelfläche eine Kreuzrändelung aufgebracht. Der Gewindeschaft (6) ist in die Mutter eines Gelenkteils (30) eingedreht, welches mit einem Kugelkopf (31) selbstrastend in eine Gelenkpfanne (32) des Reflektors (1) eingreift. Da der Verstellbolzen (6) mit dem Kopf (20) an der Außenseite der Gehäusewand (7) anliegt, ist es möglich, den Reflektor (1) sowohl an dem Kopf (20) des Verstellbolzens (6) als auch an der Handhabe (11) zu verstellen.

Die Handhabe (24) der Einstelleinrichtung, mit welcher der Reflektor (1) um die horizontal verlaufende Achse (27) verstellbar ist, ist an das freie Ende einer starren Welle (33) angeformt, welche mit ihrer Längsachse vertikal verläuft. Die Welle (33) ist angrenzend an ihre Handhabe (24) in einer Öffnung des Gehäuses (7) verdrehbar gelagert und weist an ihrem in das Innere des Gehäuses (3) freien Ende ein angeformtes Zahnrad (34) eines dritten Winkelgetriebes auf. Die Welle (33) greift in eine rinnenartige Lagerschale, welche annähernd so lang wie die Welle (33) ausgeführt ist, einer im Inneren des Scheinwerfers verlaufenden rückwärtigen Gehäusewand ein (nicht dargestellt).

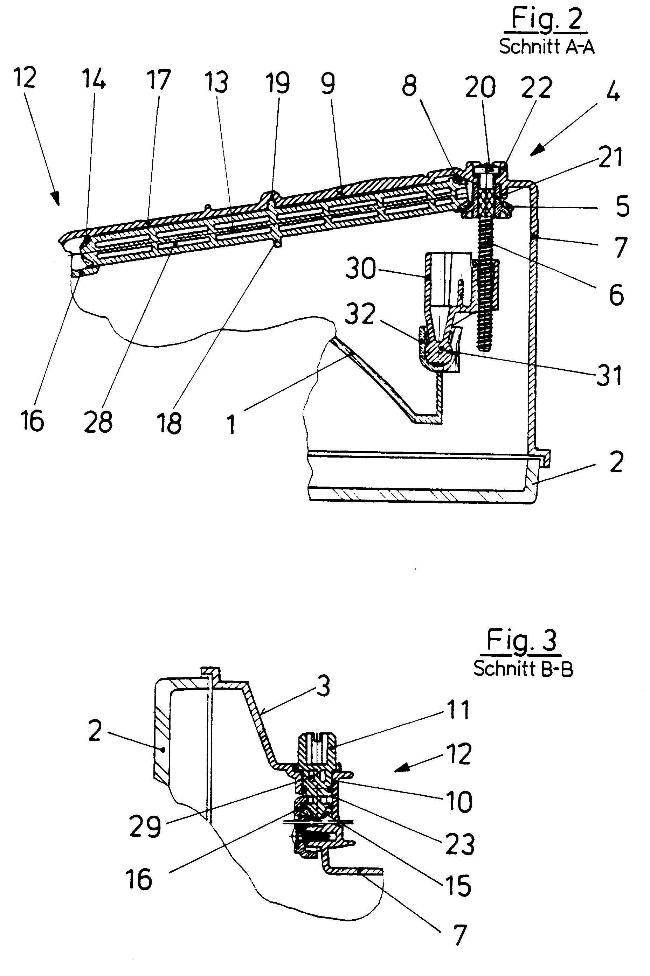

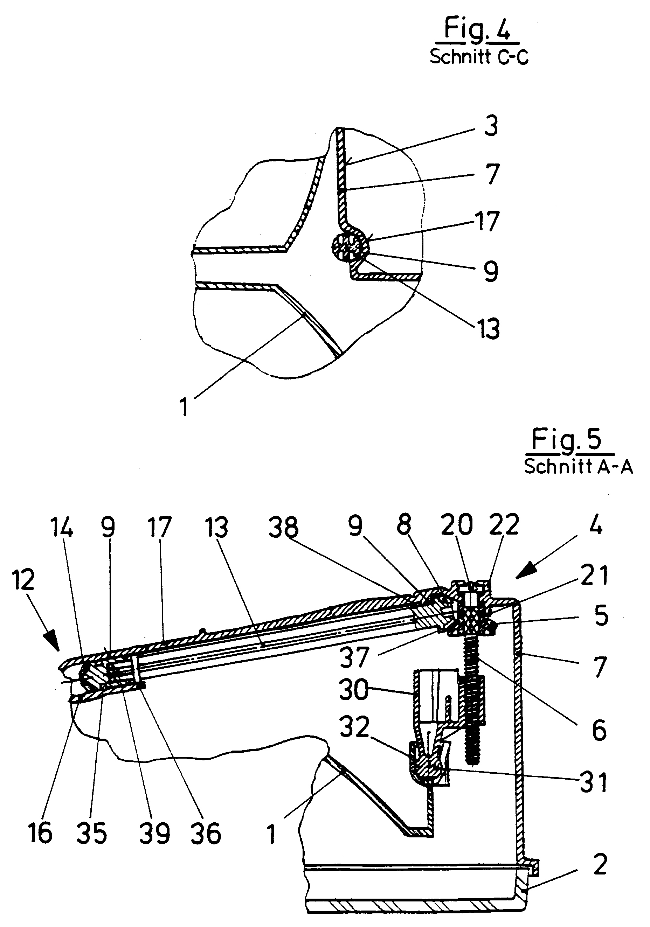

Die in Figur 5 dargestellte Einstelleinrichtung unterscheidet sich gegenüber der in Figur 2 dargestellten Einstelleinrichtung im wesentlichen durch nachstehende Merkmale:

Die Welle (13) ist zweiteilig ausgeführt, das heißt, das Zahnrad (8) des ersten Winkelgetriebes (4) ist einstückig mit der aus Kunststoff bestehenden Welle (13) hergestellt, während das Zahnrad (14) des zweiten Winkelgetriebes (12) ein separates Teil ist. Das Zahnrad (14) ist auf einen profilierten Endabschnitt (39) der Welle (13) mit einem entsprechend profilierten Hohlraum mit Spiel aufgeschoben. Die Welle (13) ist zusammen mit den beiden Zahnrädern (8 und 14) in das Gehäuse (3) eingesetzt. Die Welle (13) weist zwischen den beiden Zahnrädern (8 und 14) einen kleineren Außendurchmesser auf und liegt somit ausschließlich mit ihren freien Enden bzw. mit den von ihr getragenen Zahnrädern (8 und 14) an einer Lagerschale (9) der Gehäusewand (7) an. Der einstückig mit dem Zahnrad (8) des ersten Winkelgetriebes (4) ausgeführte Endabschnitt der Welle (13) weist angrenzend zum Zahnrad (8) eine zum zweiten Winkelgetriebe (12) hin gerichtete umlaufende Schulter (37) auf. An die Schulter (37) grenzt ein an die Innenseite der rückwärtigen Gehäusewand (7) angeformter Positionierungsansatz (38) an. Der die beiden Zahnräder (14 und 15) des zweiten Winkelgetriebes (12) abdeckende Deckel (16) greift mit einem Federelement (35) sowohl in eine Nut des axial verschiebbaren Zahnrades (14) als auch in eine Nut des Zahnrades (15) ein. Der Deckel ragt mit einem Randabschnitt (36) über das axial verstellbare Zahnrad (14) und liegt mit dem Randabschnitt (36) an der Mantelfläche eines umlaufenden Flansches der Welle (13) an. Die Welle (13) weist zwischen den Zahnrädern (8 und 14) ein sternförmiges bzw. kreuzförmiges Profil auf.

### Bezugszeichenliste

### Einstelleinrichtung für einen oder mehrere Reflektoren eines Fahrzeugscheinwerfers

- (1): Reflektor
- (2): Abschlußscheibe
- (3): Gehäuse
- (4): erstes Winkelgetriebe
- (5): Zahnrad
- (6): Verstellbolzen
- (7): Gehäusewand
- (8): Zahnrad
- (9): Lagerschale
- (10): Öffnung
- (11): Drehvorrichtung
- (12): zweites Winkelgetriebe
- (13): Welle
- (14): Zahnrad
- (15): Zahnrad
- (16): Deckel
- (17): Ausbauchung
- (18): Flansch
- (19): Nut
- (20): Kopf
- (21): Hals
- (22): Ansatz
- (23): Lagerschale
- (24): Drehvorrichtung
- (25): Seitenwand
- (26): vertikale Achse
- (27): horizontale Achse
- (28): Druckbrücken
- (29): Drehteil
- (30): Gelenkteil
- (31): Kugelkopf
- (32): Gelenkpfanne
- (33): Welle
- (34): Zahnrad
- (35): Federelement
- (36): Randabschnitt
- (37): Schulter
- (38): Positionierungsansatz
- (39): Endabschnitt

## Patentansprüche

1. Einstelleinrichtung für einen oder mehrere Reflektoren eines Fahrzeugscheinwerfers, durch welche der Reflektor (1) im Inneren eines durch eine Abschlußscheibe (2) abgeschlossenen Gehäuses um eine Achse schwenkbar ist, und welche im Inneren des Gehäuses (3) zwei miteinander gekoppelte Umlenkvorrichtungen aufweist, von denen eine Umlenkvorrichtung aus einem ersten Winkelgetriebe (4) mit einem Zahnradpaar besteht, von dem ein Zahnrad (5) drehfest mit einem Verstellbolzen (6) verbunden ist, welcher den Reflektor (1) mit einer rückwärtigen Gehäusewand (7) verbindet, und das andere Zahnrad (8) zwischen dem Zahnrad (5) des Verstellbolzens (6) und einer Lagerschale (9) der rückwärtigen Gehäusewand (7) eingesetzt ist, und die andere Umlenkvorrichtung mit einem von dem ersten Winkelgetriebe (4) wegführenden Ende in einer Öffnung (10) des Gehäuses (3) verdrehbar gelagert ist und eine von der Außenseite des Gehäuses (3) her betätigbare Drehvorrichtung (11) aufweist, dadurch gekennzeichnet, daß
- die mit dem ersten Winkelgetriebe (4) gekoppelte Umlenkvorrichtung aus einem zweiten Winkelgetriebe (12) mit einem Zahnradpaar besteht,
- eine aus starrem Material hergestellte Welle (13)
- an einem freien Ende drehfest mit dem Zahnrad (8) des ersten Winkelgetriebes (4) und mit dem anderen freien Ende drehfest mit einem Zahnrad (14) des zweiten Winkelgetriebes (12) verbunden ist,
- zur Innenseite der rückwärtigen Gehäusewand (7) angrenzend verläuft,
- zumindest mit ihren die Zahnräder (8 und 14) tragenden Enden in eine Lagerschale (9) der rückwärtigen Gehäusewand (7) eingesetzt ist,
- in der rinnenartigen Lagerschale (9) radial durch ein Befestigungs- und/oder ein Abdeckungselement für die Zahnräder (5 und 15) gehalten ist, welche mit ihren Zähnen in den Zähnen der drehfest mit der Welle (13) verbundenen Zahnräder (8 und 14) kämmen.

2. Einstelleinrichtung nach Anspruch 1, dadurch gekennzeichnet, daß die Welle (13) mit dem das Zahnrad (8) des ersten Winkelgetriebes (4) aufweisenden Endabschnitt durch das Zahnrad (5) des Verstellbolzens (6) und mit dem anderen Endabschnitt durch einen die beiden Zahnräder (14 und 15) des zweiten Winkelgetriebes (12) abdeckenden Deckel (16) in der Lagerschale (9) radial gehalten ist.

3. Einstelleinrichtung nach Anspruch 2, dadurch gekennzeichnet, daß die Lagerschale (9) rinnenförmig ausgeführt ist und die Welle (13) annähernd über ihre gesamte Länge in der rinnenförmigen Lagerschale (9) gelagert ist.

4. Einstelleinrichtung nach einem der Ansprüche 1 bis 3, dadurch gekennzeichnet, daß in die rückwärtige Gehäusewand (7), in welche eine Lagerschale (9) für das Zahnrad (14) des zweiten Winkelgetriebes (12) eingebracht ist, für das in der Öffnung des Gehäuses (3) gelagerte Zahnrad (5) des zweiten Winkelgetriebes (12) eine Lagerschale (23) eingebracht ist, welche in die Lagerschale (9) für das Zahnrad (14) der Welle (13) übergeht und zusammen mit der Lagerschale (9) in einem Winkel verläuft.

5. Einstelleinrichtung nach einem der Ansprüche 1 bis 4, dadurch gekennzeichnet, daß die Achse der Welle (13) horizontal und die Achse des in der Öffnung des Gehäuses (3) gelagerten Zahnrades (15) vertikal verläuft, wobei das Zahnrad (15) in eine Öffnung der oberen Seitenwand (25) des Gehäuses (3) eingesetzt ist und mit seiner Drehvorrichtung (11) einer Drehvorrichtung (24) einer anderen Einstelleinrichtung für den Reflektor (1) benachbart liegt.

6. Einstelleinrichtung nach einem der Ansprüche 1 bis 5 dadurch gekennzeichnet, daß zumindest eines der drehfest mit der Welle (13) verbundenen Zahnräder (8 und 14) einstückig mit der Welle (13) hergestellt ist.

7. Einstelleinrichtung nach einem der Ansprüche 1 bis 6, dadurch gekennzeichnet, daß ein Zahnrad (14) von einem freien Endabschnitt der starren Welle (13) axial verschiebbar getragen ist.

8. Einstelleinrichtung nach Anspruch 7, dadurch gekennzeichnet, daß das zweite Winkelgetriebe (12) das axial verschiebbare Zahnrad (14) aufweist, in welches eine umlaufende Nut eingebracht ist, in welcher ein die beiden Zahnräder (14 und 15) abdeckender Deckel (16) mit einem Federelement (35) eingreift.

9. Einstelleinrichtung nach Anspruch 8, dadurch gekennzeichnet, daß der Deckel (16) mit einem freien Randabschnitt (36) sich über das verschiebbare Zahnrad (14) hinaus erstreckt und zur Mantelfläche der Welle (13) angrenzend verläuft.

10. Einstelleinrichtung nach einem der Ansprüche 6 bis 9 dadurch gekennzeichnet, daß die Welle (13) an einem einstückig mit dem Zahnrad (8) des ersten Winkelgetriebes (4) ausgeführten freien Endabschnitt eine zum zweiten Winkelgetriebe (12) hin gerichtete umlaufende Schulter (37) aufweist, an welcher ein Positionierungsansatz (38) der Innenseite der rückwärtigen Gehäusewand (7) anliegt.

## Claims

1. An adjusting device for one or more reflectors of a vehicle headlamp, by means of which the reflector (1) can be swivelled about an axis in the interior of a housing which is closed by a cover lens (2), and which comprises two deflecting devices coupled to each other in the interior of the housing (3), one deflection device of which consists of a first angular gear (4) comprising a gearwheel pair, one gearwheel (5) of which is attached rotationally fixed to an adjusting bolt (6) which connects the reflector (1) to a back housing wall (7), and the other gearwheel (8) of which is inserted between the gearwheel (5) of the adjusting bolt (6) and a bearing shell (9) on the back housing wall (7), and the other deflection device is rotatably mounted at its end leading away from the first angular gear (4) in an opening (10) in the housing (3) and comprises a turning device (11) which can be operated from the outside of the housing (3), characterised in that
- the deflection device coupled to the first angular gear (4) consists of a second angular gear (12) which comprises a gearwheel pair,
- a spindle (13) made of rigid material
- is attached rotationally fixed at one end to the gearwheel (8) of the first angular drive (4) and is attached rotationally fixed at its other end to a gearwheel (14) of the second angular drive (12),
- runs adjacent to the inner face of the back housing wall (7),
- is inserted, at least at its ends which carry the gearwheels (8 and 14), in a bearing shell (9) on the back housing wall (7),
- is held radially in the channel-like bearing shell (9) by a fastening and/or a covering element for the gearwheels (5 and 15), the teeth of which mesh with the teeth of the gearwheels (8 and 14) attached rotationally fixed to the spindle (13).

2. An adjusting device according to claim 1, characterised in that at its end section which comprises the gearwheel (8) of the first angular drive (4) the spindle (13) is held radially in the bearing shell (9) by the gearwheel (5) of the adjusting bolt (6) and at its other end section the spindle is held radially in the bearing shell by a cover (16) which covers the two gearwheels (14 and 15) of the second angular drive (12).

3. An adjusting device according to claim 2, characterised in that the bearing shell (9) is of channel-like construction and the spindle (13) is mounted over almost its entire length in the channel-like bearing shell (9).

4. An adjusting device according to any one of claims 1 to 3, characterised in that in the back housing wall (7), in which a bearing shell (9) for the gearwheel (14) of the second angular drive (12) is installed, a bearing shell (23) is installed for the gearwheel (5) of the second angular drive (12) which is mounted in the opening in the housing (3), which bearing shell (23) extends into the bearing shell (9) for the gearwheel (14) of the spindle (13) and runs at an angle together with the bearing shell (9).

5. An adjusting device according to any one of claims 1 to 4, characterised in that the axis of the spindle (13) runs horizontally and the axis of the gearwheel (15) mounted in the opening in the housing (3) runs vertically, wherein the gearwheel (15) is inserted in an opening in the upper sidewall (25) of the housing (3) and its turning device (11) is situated adjacent to a turning device (24) of another adjusting device for the reflector (1).

6. An adjusting device according to any one of claims 1 to 5, characterised in that at least one of the gearwheels (8 and 14) which are attached rotationally fixed to the spindle (13) is manufactured in one piece with the spindle (13).

7. An adjusting device according to any one of claims 1 to 6, characterised in that one gearwheel (14) is borne axially displaceably by a free end section of the rigid spindle (13).

8. An adjusting device according to claim 7, characterised in that the second angular drive (12) comprises the axially displaceable gearwheel (14), in which an encircling groove is installed, into which a spring element (35) of a cover (16) which covers the two gearwheels (14 and 15) fits.

9. An adjusting device according to claim 8, characterised in that the free edge section (36) of the cover (16) extends beyond the displaceable gearwheel (14) and runs adjacent to the curved surface of the spindle (13).

10. An adjusting device according to any one of claims 6 to 9, characterised in that at a free end section which is constructed in one piece with the gearwheel (8) of the first angular drive (4) the spindle (13) has an encircling shoulder (37) oriented towards the second angular drive (12), against which shoulder a positioning projection (38) on the inner face of the back housing wall (7) is seated.

## Revendications

1. Dispositif de réglage pour un ou plusieurs réflecteurs d'un projecteur de véhicule, par lequel le réflecteur (1) peut basculer autour d'un axe à l'intérieur d'un boîtier refermé par une plaque de fermeture (2), et qui présente à l'intérieur du boîtier (3) deux dispositifs de renvoi accouplés l'un à l'autre, dont un dispositif de renvoi est constitué par une première transmission en équerre (4) comportant une paire de roues dentées, dont une roue dentée (5) est reliée solidairement en rotation à un boulon de réglage (6) qui relie le réflecteur (1) à une paroi de boîtier arrière (7), et dont l'autre roue dentée (8) est mise en place entre la roue dentée (5) du boulon de réglage (6) et une coque de montage (9) de la paroi de boîtier arrière (7), et dont l'autre dispositif de renvoi est monté en rotation, par une extrémité dirigée en éloignement de la première transmission en équerre (4), dans une ouverture (10) du boîtier (3) et présente un dispositif tournant (11) susceptible d'être actionné depuis le côté extérieur du boîtier (3), caractérisé en ce que
- le dispositif de renvoi accouplé à la première transmission en équerre (4) est constitué par une seconde transmission en équerre (12) présentant une paire de roues dentées,
- un arbre (13) réalisé en un matériau rigide
-- est relié par une extrémité libre solidairement en rotation à la roue dentée (8) de la première transmission en équerre (4) et par l'autre extrémité libre solidairement en rotation à une roue dentée (14) de la seconde transmission en équerre (12),
-- s'étend de façon adjacente à la face intérieure de la paroi de boîtier arrière (7),
-- est mis en place du moins par ses extrémités portant les roues dentées (8 et 14) dans une coque de montage (9) de la paroi de boîtier arrière (7), et
-- est retenu dans la coque de montage en forme de rainure (9) radialement par un élément de fixation et/ou de recouvrement pour les roues dentées (5 et 15) qui engrènent avec leurs dents dans les dents des roues dentées (8 et 14) reliées solidairement en rotation à l'arbre (13).

2. Dispositif de réglage selon la revendication 1, caractérisé en ce que l'arbre (13) est retenu radialement dans la coque de montage (9), au niveau du tronçon d'extrémité présentant la roue dentée (8) de la première transmission en équerre (4) par la roue dentée (5) du boulon de réglage (6), et au niveau de l'autre tronçon d'extrémité par un couvercle (16) recouvrant les deux roues dentées (14 et 15) de la seconde transmission en équerre (12).

3. Dispositif de réglage selon la revendication 2, caractérisé en ce que la coque de montage (9) est réalisée en forme de rainure et l'arbre (13) est monté approximativement sur toute sa longueur dans la coque de montage en forme de rainure (9).

4. Dispositif de réglage selon l'une quelconque des revendications 1 à 3, caractérisé en ce qu'il est prévu, dans la paroi de boîtier arrière (7) dans laquelle est logée une coque de montage (9) pour la roue dentée (14) de la seconde transmission en équerre (12), une coque de montage (23) pour la roue dentée (5) de la seconde transmission en équerre (12), qui est montée dans l'ouverture du boîtier (3), et ladite coque de montage (23) se transforme en la coque de montage (9) pour la roue dentée (14) de l'arbre (13) et s'étend conjointement avec la coque de montage (9) sous un angle.

5. Dispositif de réglage selon l'une quelconque des revendications 1 à 4, caractérisé en ce que l'axe de l'arbre (13) s'étend horizontalement et l'axe de la roue dentée (15) montée dans l'ouverture du boîtier (3) s'étend verticalement, et la roue dentée (15) est mise en place dans une ouverture de la paroi latérale supérieure (25) du boîtier (3) et se trouve par son dispositif tournant (11) au voisinage d'un dispositif tournant (24) d'un autre dispositif de réglage pour le réflecteur (1).

6. Dispositif de réglage selon l'une quelconque des revendications 1 à 5, caractérisé en ce que l'une au moins des roues dentées (8 et 14) reliées solidairement en rotation à l'arbre (13) est réalisée en une seule pièce avec l'arbre (13).

7. Dispositif de réglage selon l'une quelconque des revendications 1 à 6, caractérisé en ce qu'une roue dentée (14) est portée de façon axialement mobile par un tronçon d'extrémité libre de l'arbre rigide (13).

8. Dispositif de réglage selon la revendication 7, caractérisé en ce que la seconde transmission en équerre (12) présente la roue dentée axialement mobile (14) dans laquelle est ménagée une gorge périphérique dans laquelle un couvercle (16) qui recouvre les deux roues dentées (14 et 15) s'engage par un élément élastique (35).

9. Dispositif de réglage selon la revendication 8, caractérisé en ce que le couvercle (16) s'étend par un secteur de bordure libre (36) au-delà de la roue dentée mobile (14) et il est adjacent à la surface enveloppe de l'arbre (13).

10. Dispositif de réglage selon l'une quelconque des revendications 6 à 9, caractérisé en ce que l'arbre (13) présente, au niveau du tronçon d'extrémité libre réalisé en une seule pièce avec la roue dentée (8) de la première transmission en équerre (4), un épaulement périphérique (37) dirigé vers la seconde transmission en équerre (12), contre lequel s'appuie un talon de positionnement (38) de la face intérieure de la paroi de boîtier arrière (7).
